# EUROPÄISCHE PATENTANMELDUNG

(11) **EP 4 596 888 A1**
(43) Veröffentlichungstag der Anmeldung: **06.08.2025**
(21) Anmeldenummer: 24222083.8
(22) Anmeldetag: 20.12.2024
(51) Int. Cl.: F04D 27/00, H02H 7/097, F04D 15/02, F24C 15/32

(54) **VERFAHREN ZUM BETRIEB EINER VORRICHTUNG UND VORRICHTUNG ZUR DURCHFÜHRUNG DES VERFAHRENS**

(30) Priorität: 30.01.2024 DE 102024102507
(71) Anmelder: Miele & Cie. KG, 33332 Gütersloh (DE)
(72) Erfinder: Rodehüser, Tobias, 59329 Wadersloh (DE); Rech, Thomas, 53881 Euskirchen (DE)

(57) **Zusammenfassung**

Die Erfindung betrifft ein Verfahren zum Betrieb einer Vorrichtung (2), umfassend ein Gehäuse (4), einen in dem Gehäuse (4) angeordneten Behandlungsraum (6) zur Behandlung eines Behandlungsobjekts, eine Steuerung (8) und eine mit der Steuerung (8) signalübertragend verbundene Fördereinrichtung (10) für ein Fluid mit einem um eine Drehachse (12) der Fördereinrichtung (10) drehbaren Förderelement (14) zur Förderung des Fluids durch den Behandlungsraum (6), wobei das Verfahren die folgenden Verfahrensschritte in der angegebenen Reihenfolge aufweist: Erkennung einer Drehrichtung des Förderelements (14) mittels der Steuerung (8), wobei das Förderelement (14) eine Vorzugsdrehrichtung mit einem dazu korrespondierenden Fördervolumen der Fördereinrichtung (10) und eine der Vorzugsdrehrichtung entgegengesetzte Reduktionsdrehrichtung mit einem dazu korrespondierenden und gegenüber der Vorzugsdrehrichtung reduzierten Fördervolumen der Fördereinrichtung (10) aufweist; Auslösen einer Vorrichtungsaktion mittels der Steuerung (8) in Abhängigkeit der Erkennung der Vorzugsdrehrichtung oder der Reduktionsdrehrichtung des Förderelements (14).

Ferner betrifft die Erfindung eine entsprechende Vorrichtung (2).

## Beschreibung

Die Erfindung betrifft ein Verfahren zum Betrieb einer Vorrichtung sowie eine Vorrichtung zur Durchführung des Verfahrens.

Derartige Verfahren und Vorrichtungen sind aus dem Stand der Technik in einer Vielzahl von Ausführungsformen bereits vorbekannt. Die bekannten Vorrichtungen umfassen ein Gehäuse, einen in dem Gehäuse angeordneten Behandlungsraum zur Behandlung eines Behandlungsobjekts, eine Steuerung und eine mit der Steuerung signalübertragend verbundene Fördereinrichtung für ein Fluid mit einem um eine Drehachse der Fördereinrichtung drehbaren Förderelement zur Förderung des Fluids durch den Behandlungsraum.

Der Erfindung stellt sich somit das Problem, ein Verfahren zum Betrieb einer Vorrichtung und eine Vorrichtung zur Durchführung eines Verfahrens zu verbessern.

Erfindungsgemäß wird dieses Problem durch ein Verfahren mit den Merkmalen des Patentanspruchs 1 gelöst, wonach das Verfahren die die folgenden Verfahrensschritte in der angegebenen Reihenfolge aufweist: Erkennung einer Drehrichtung des Förderelements mittels der Steuerung, wobei das Förderelement eine Vorzugsdrehrichtung mit einem dazu korrespondierenden Fördervolumen der Fördereinrichtung und eine der Vorzugsdrehrichtung entgegengesetzte Reduktionsdrehrichtung mit einem dazu korrespondierenden und gegenüber der Vorzugsdrehrichtung reduzierten Fördervolumen der Fördereinrichtung aufweist; Auslösen einer Vorrichtungsaktion mittels der Steuerung in Abhängigkeit der Erkennung der Vorzugsdrehrichtung oder der Reduktionsdrehrichtung des Förderelements. Ferner wird dieses Problem durch eine Vorrichtung mit den Merkmalen des Patentanspruchs 6 gelöst. Vorteilhafte Ausgestaltungen und Weiterbildungen der Erfindung ergeben sich aus den nachfolgenden Unteransprüchen.

Der mit der Erfindung erreichbare Vorteil besteht insbesondere darin, dass ein Verfahren zum Betrieb einer Vorrichtung und eine Vorrichtung zur Durchführung eines Verfahrens verbessert sind. Aufgrund der erfindungsgemäßen Ausbildung des Verfahrens und der Vorrichtung ist es möglich, das Vorliegen einer generell oder lediglich für mindestens einen einzelnen vorher festgelegten Betriebsmodus der erfindungsgemäßen Vorrichtung ungewünschten Drehrichtung des Förderelements der Fördereinrichtung der erfindungsgemäßen Vorrichtung automatisch zu erkennen, um in Abhängigkeit davon die erfindungsgemäße Vorrichtung mittels der Steuerung derart anzusteuern, dass ein ordnungsgemäßer und funktionssicherer Weiterbetrieb der erfindungsgemäßen Vorrichtung gewährleistet ist. Dies ist beispielsweise dann wichtig, wenn ein vorher festgelegtes Fördervolumen des Fluids, also ein vorher festgelegter Volumenstrom des Fluids, für eine ordnungsgemäße und sichere Funktion der erfindungsgemäßen Vorrichtung erforderlich ist. Beispielsweise kann es sich hierbei um eine gewünschte Verteilung von Wärme und/oder um eine für den sicheren Betrieb der erfindungsgemäßen Vorrichtung notwendige Wärmeabfuhr mittels des Fluids handeln.

Grundsätzlich sind das erfindungsgemäße Verfahren und die erfindungsgemäße Vorrichtung in weiten geeigneten Grenzen frei wählbar. Beispielsweise kann es sich bei der Vorrichtung um ein Haushaltsgerät oder um ein gewerbliches Gerät mit einer zu Haushaltsgeräten vergleichbaren Funktion handeln. Rein exemplarisch sei hier auf Gargeräte wie Backofen, Dampfgarer, Kombinationsgargeräte mit einer Mehrzahl von voneinander verschiedenen Beheizungsarten, Geschirrspülmaschinen sowie auf Wäschebehandlungsmaschinen, wie Waschmaschinen, Wäschetrockner oder Waschtrockner, hingewiesen. Bei der Fördereinrichtung kann es sich um ein Gebläse oder um eine Pumpe handeln. Entsprechend kann das Förderelement der Fördereinrichtung als ein Laufrad oder dergleichen ausgebildet sein, wobei die Laufradgeometrie üblicherweise eine Drehrichtung mit einem dazu korrespondierenden Fördervolumen und eine dazu entgegengesetzte Drehrichtung mit einem dazu korrespondierenden und im Vergleich zu dem vorgenannten Fördervolumen reduzierten Fördervolumen bedingt.

Eine vorteilhafte Weiterbildung des erfindungsgemäßen Verfahrens sieht vor, dass die Ausführung der vorgenannten Verfahrensschritte in der angegebenen Reihenfolge nach jedem Einschalten der Fördereinrichtung mittels der Steuerung erfolgt. Auf diese Weise ist sichergestellt, dass die Fördereinrichtung bei jedem Betrieb der Fördereinrichtung ordnungsgemäß und funktionssicher arbeitet.

Eine weitere vorteilhafte Weiterbildung des erfindungsgemäßen Verfahrens sieht vor, dass die Erkennung der Drehrichtung des Förderelements in Abhängigkeit eines Verhältnisses einer elektrischen Leistungsaufnahme eines Motors der Fördereinrichtung zum Antrieb des Förderelements zu einer Drehzahl des Förderelements erfolgt. Hierdurch ist eine auf der einen Seite sehr einfache und auf der anderen Seite sehr zuverlässige Erkennung der Drehrichtung des Förderelements ermöglicht. Beispielsweise kann das oben genannte Verhältnis von Leistungsaufnahme zu Drehzahl auf dem Fachmann an sich bekannte Weise vorab ermittelt und in der Steuerung der erfindungsgemäßen Vorrichtung zwecks späterer Verwendung in dem erfindungsgemäßen Verfahrens als ein Algorithmus, zum Beispiel ein Grenzpolynom, oder eine Tabelle, zum Beispiel eine sogenannte Look-up Tabelle, abgespeichert sein. Hierfür werden vorab beispielsweise das vorgenannte Verhältnis angebende Kennlinien ermittelt, wobei mindestens eine Kennlinie für die Vorzugsdrehrichtung und mindestens eine Kennlinie für die Reduktionsdrehrichtung aufgenommen wird.

Eine andere vorteilhafte Weiterbildung des erfindungsgemäßen Verfahrens sieht vor, dass die Vorrichtungsaktion eine der nachfolgend genannten Aktionen der Vorrichtung umfasst: Abschalten der Fördereinrichtung mittels der Steuerung oder Abschalten der Fördereinrichtung und erneutes Einschalten der Fördereinrichtung mittels der Steuerung nach einem erfolgten Auslauf des Förderelements der Fördereinrichtung, Abschalten einer Heizung der Vorrichtung mittels der Steuerung. Auf diese Weise ist bei dem Vorliegen einer generell oder lediglich für mindestens einen einzelnen vorher festgelegten Betriebsmodus der erfindungsgemäßen Vorrichtung falschen Drehrichtung des Förderelements der Fördereinrichtung jeweils eine adäquate und damit für die ordnungsgemäße und sichere Funktion der erfindungsgemäßen Vorrichtung hinreichende Reaktion auf diesen Fehlerfall der erfindungsgemäßen Vorrichtung angegeben. Je nach den Erfordernissen des Einzelfalls ist dem Fachmann damit eine passende Reaktion der erfindungsgemäßen Vorrichtung an die Hand gegeben.

Grundsätzlich ist es denkbar, dass das Verfahren in einem Normalbetrieb der Vorrichtung lediglich einen Betriebsmodus aufweist, wobei dieser Betriebsmodus eine Drehung des Förderelements in die Vorzugsdrehrichtung umfasst. Eine besonders vorteilhafte Weiterbildung des erfindungsgemäßen Verfahrens sieht jedoch vor, dass das Verfahren in einem Normalbetrieb der Vorrichtung mindestens einen ersten Betriebsmodus und mindestens einen zweiten Betriebsmodus aufweist, wobei der erste Betriebsmodus eine Drehung des Förderelements in die Vorzugsdrehrichtung und der zweite Betriebsmodus eine Drehung des Förderelements in die Reduktionsdrehrichtung umfasst. Hierdurch sind beide grundsätzlich möglichen Drehrichtungen des Förderelements für den Normalbetrieb der erfindungsgemäßen Vorrichtung nutzbar gemacht.

Wie oben bereits ausgeführt, ist die erfindungsgemäße Vorrichtung nach Art, Funktionsweise, Material und Dimensionierung in weiten geeigneten Grenzen frei wählbar.

Eine vorteilhafte Weiterbildung der erfindungsgemäßen Vorrichtung sieht vor, dass die Vorrichtung als eine Vorrichtung mit einer als Gebläse ausgebildeten Fördereinrichtung ausgebildet ist, bevorzugt, dass das Gebläse als ein Heißluftgebläse zur Verteilung einer von einer zu dem Gebläse korrespondierend angeordneten Heizung der Vorrichtung emittierten Wärme in dem Behandlungsraum ausgebildet ist. Auf diese Weise ist ein Hauptanwendungsfall einer Fördereinrichtung bei einem Haushaltsgerät oder einem gewerblichen Gerät mit zu dem Haushaltsgerät vergleichbarer Funktionalität angegeben. Rein exemplarisch sei hier lediglich auf Gargeräte mit einem als Garraum ausgebildeten Behandlungsraum und auf Geschirrspülmaschinen mit einem als Spülraum ausgebildeten Behandlungsraum hingewiesen.

Ferner sieht eine weitere vorteilhafte Weiterbildung der erfindungsgemäßen Vorrichtung vor, dass ein Motor der Fördereinrichtung als ein einphasiger, geregelter Motor ausgebildet ist. Derartige Motoren sind kompakt und kostengünstig sowie universell einsetzbar. Jedoch ist die Erfindung auch bei anderen Motorarten, beispielsweise auch bei mehrphasigen Motoren, vorteilhaft einsetzbar. Die vorgenannte Formulierung "geregelter Motor" ist hier weit auszulegen und umfasst auch Steuerungen.

Ein Ausführungsbeispiel der Erfindung ist in den Zeichnungen rein schematisch dargestellt und wird nachfolgend näher beschrieben. Es zeigt
- Figur 1: eine erfindungsgemäße Vorrichtung zur Durchführung des erfindungsgemäßen Verfahrens in einer Frontalansicht und
- Figur 2: ein Leistungsaufnahme-Drehzahl-Diagramm der Fördereinrichtung der Vorrichtung gemäß Fig. 1.

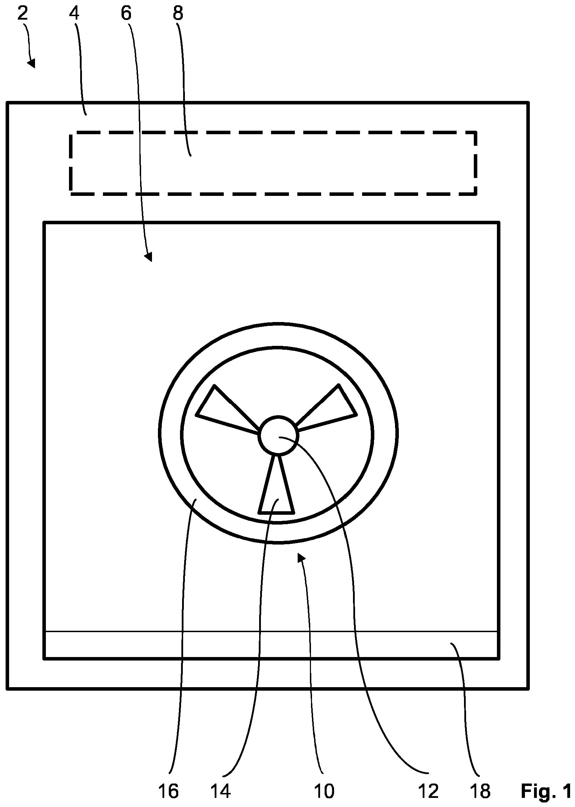

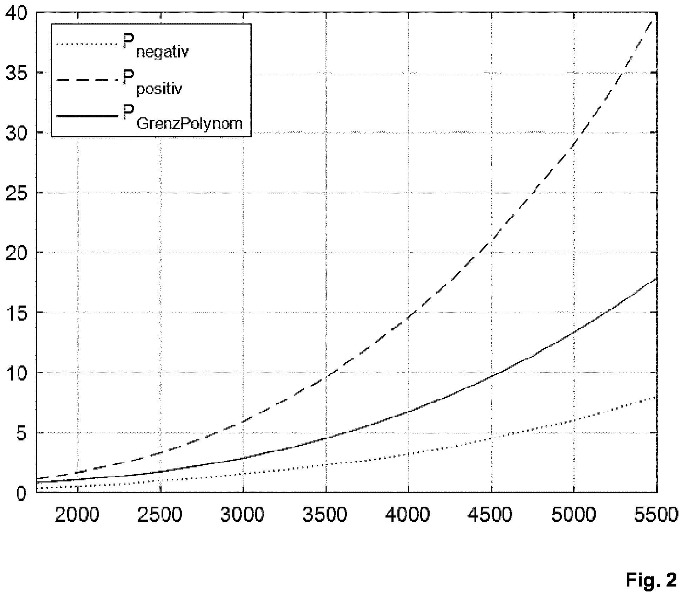

In den Fig. 1 und 2 ist ein Ausführungsbeispiel der erfindungsgemäßen Vorrichtung zur Durchführung des erfindungsgemäßen Verfahrens rein exemplarisch dargestellt.

Die Vorrichtung 2 ist als ein Haushalts-Geschirrspüler ausgebildet und umfasst ein Gehäuse 4, einen in dem Gehäuse 4 angeordneten Behandlungsraum 6 zur Behandlung eines nicht dargestellten und als zu spülendes Geschirr ausgebildeten Behandlungsobjekts, eine Steuerung 8 und eine mit der Steuerung 8 signalübertragend verbundene und als Gebläse ausgebildete Fördereinrichtung 10 für ein nicht dargestelltes und als Luft ausgebildetes Fluid mit einem um eine Drehachse 12 der Fördereinrichtung 10 drehbaren und als Laufrad ausgebildetes Förderelement 14 zur Förderung des Fluids durch den Behandlungsraum 6. Das Gebläse 10 ist ferner als ein Heißluftgebläse zur Verteilung einer von einer zu dem Gebläse 10 korrespondierend angeordneten Heizung 16 der Vorrichtung 2 emittierten Wärme in dem Behandlungsraum 6 ausgebildet. Die Wärme ist nicht dargestellt. Ein nicht dargestellter elektrischer Motor der Fördereinrichtung 10 ist bei dem vorliegenden Ausführungsbeispiel als ein einphasiger, geregelter Motor ausgebildet. Der als Spülraum ausgebildete Behandlungsraum 6 ist auf dem Fachmann an sich bekannte Art und Weise mittels einer an dem Gehäuse 4 drehbar angeordneten Tür 18 der Vorrichtung 2 verschließbar. In der Fig. 1 ist die Tür 18 in deren Öffnungslage dargestellt.

Aufgrund der nicht dargestellten Laufradkrümmung des Laufrads 14 weist das Laufrad 14, also das Förderelement, eine Vorzugsdrehrichtung mit einem dazu korrespondierenden Fördervolumen der Fördereinrichtung 10 und eine der Vorzugsdrehrichtung entgegengesetzte Reduktionsdrehrichtung mit einem dazu korrespondierenden und gegenüber der Vorzugsdrehrichtung reduzierten Fördervolumen der Fördereinrichtung 10 auf. Die als Gebläse ausgebildete Fördereinrichtung 10 kann also in Vorzugsdrehrichtung, beispielsweise bei einer Drehung des Laufrads 14 in der Bildebene der Fig. 1 im Gegenuhrzeigersinn, wesentlich mehr Volumen, zum Beispiel von der Heizung 16 erwärmte Luft, fördern, als dies bei einem Betrieb der Fördereinrichtung 10 in Reduktionsdrehrichtung, beispielsweise bei einer Drehung des Laufrads 14 in der Bildebene der Fig. 1 im Uhrzeigersinn, möglich ist. Die Aerodynamik der Vorrichtung 2 ist hier auf die Vorzugsdrehrichtung abgestimmt, also für den relativ höheren Volumenstrom, ausgelegt. Entsprechend ist es für die ordnungsgemäße Funktion und den sicheren Betrieb der Vorrichtung 2, nämlich des Haushalts-Geschirrspülers, wesentlich, dass sich das Laufrad 14 bei eingeschalteter Fördereinrichtung 10, also bei eingeschaltem Gebläse, in die Vorzugsdrehrichtung dreht. Nur bei dem Betrieb der Fördereinrichtung 10 in der Vorzugsdrehrichtung des Förderelements 14, nämlich des Laufrads des Gebläses, ist eine ordnungsgemäße Verteilung der von der Heizung 16 emittierten Wärme in dem Behandlungsraum 6 sichergestellt, so dass das in dem Behandlungsraum 6 befindliche Behandlungsobjekt, nämlich das gespülte Geschirr, einerseits wie gewünscht getrocknet und andererseits keine übermäßige thermische Belastung von Bauteilen der Vorrichtung 2 durch einen zu geringen Volumenstrom der mittels der Heizung 16 erwärmten und durch das Gebläse 10 geförderten Luft droht.

Hierfür weist das mittels der Vorrichtung 2 durchführbare erfindungsgemäße Verfahren gemäß dem vorliegenden Ausführungsbeispiel die folgenden Verfahrensschritte in der angegebenen Reihenfolge auf: Erkennung einer Drehrichtung des Förderelements 14 mittels der Steuerung 8, wobei das Förderelement 14 die vorgenannte Vorzugsdrehrichtung mit dem dazu korrespondierenden Fördervolumen der Fördereinrichtung 10 und die der Vorzugsdrehrichtung entgegengesetzte Reduktionsdrehrichtung mit dem dazu korrespondierenden und gegenüber der Vorzugsdrehrichtung reduzierten Fördervolumen der Fördereinrichtung 10 aufweist; Auslösen einer Vorrichtungsaktion mittels der Steuerung 8 in Abhängigkeit der Erkennung der Vorzugsdrehrichtung oder der Reduktionsdrehrichtung der Fördervorrichtung 10.

Die Ausführung der vorgenannten Verfahrensschritte erfolgt bei dem vorliegenden Ausführungsbeispiel in der angegebenen Reihenfolge nach jedem Einschalten der Fördereinrichtung 10, also des Gebläses, mittels der Steuerung 8. Ferner wird die Erkennung der Drehrichtung des Förderelements 14 in Abhängigkeit eines Verhältnisses einer elektrischen Leistungsaufnahme des Motors der Fördereinrichtung 10 zum Antrieb des Förderelements 14 zu einer Drehzahl des Förderelements 10 durchgeführt.

Das oben genannte Verhältnis von Leistungsaufnahme zu Drehzahl wird auf dem Fachmann an sich bekannte Weise vorab ermittelt und in der Steuerung 8 der Vorrichtung 2 zwecks späterer Verwendung in dem vorgenannten Verfahren als ein Algorithmus, zum Beispiel ein Grenzpolynom, oder eine Tabelle, zum Beispiel eine sogenannte Look-up Tabelle, abgespeichert. Hierfür werden vorab beispielsweise das vorgenannte Verhältnis angebende Kennlinien ermittelt, wobei mindestens eine Kennlinie für die Vorzugsdrehrichtung und mindestens eine Kennlinie für die Reduktionsdrehrichtung aufgenommen wird. Siehe hierzu die Fig. 2, in der die elektrische Leistungsaufnahme des Motors des Gebläses 10 in Abhängigkeit der Drehzahl des Lüfterrads 14 des Gebläses 10 dargestellt ist. Die auf der Y-Achse angegebenen Werte für die Leistungsaufnahme sind in W und die auf der X-Achse angegebenen Werte für die Drehzahl sind in Umdrehungen/Minute angegeben. In der Fig. 2 sind eine zu der Vorzugsdrehrichtung des Lüfterrads 14 korrespondierende und als Pₚₒₛᵢₜᵢᵥ bezeichnete gestrichelte Kennlinie, eine zu der Reduktionsdrehrichtung des Lüfterrads 14 korrespondierende und als P_{negativ} bezeichnete gepunktete Kennlinie und zwischen diesen beiden Kennlinien eine als P_{GrenzPolynom} bezeichnete durchgezogene Grenzkennlinie gezeigt. Liegt das Verhältnis von Leistungsaufnahme zu der Drehzahl in der Fig. 2 oberhalb der Grenzkennlinie, dann wird das Vorliegen der Vorzugsdrehrichtung erkannt. Anderenfalls, also wenn das Verhältnis von Leistungsaufnahme zu der Drehzahl in der Fig. 2 unterhalb der Grenzkennlinie liegt, dann wird das Vorliegen der Reduktionsdrehrichtung erkannt.

Die Vorrichtungsaktion umfasst hier ein Abschalten der Fördereinrichtung 10 und ein erneutes Einschalten der Fördereinrichtung 10 mittels der Steuerung 8 nach einem erfolgten Auslauf des Förderelements 14 der Fördereinrichtung 10. Jedoch sind auch andere Vorrichtungsaktionen denkbar. Beispielsweise sei hier auf lediglich ein Abschalten der Fördereinrichtung mittels der Steuerung oder ein Abschalten einer Heizung der Vorrichtung mittels der Steuerung genannt. Der Fachmann wird je nach den Erfordernissen des Einzelfalls die geeignete Vorrichtungsaktion auswählen.

Bei dem vorliegenden Ausführungsbeispiel umfasst das Verfahren in einem Normalbetrieb der Vorrichtung 2 lediglich einen Betriebsmodus, in dem eine Drehung des Förderelements 14, also des Lüfterrads, in die Vorzugsdrehrichtung erfolgt. Jedoch sind grundsätzlich auch Ausführungsformen der Erfindung denkbar, bei denen das erfindungsgemäße Verfahren in einem Normalbetrieb mindestens einen ersten Betriebsmodus und mindestens einen zweiten Betriebsmodus aufweist, wobei der erste Betriebsmodus eine Drehung des Förderelements in die Vorzugsdrehrichtung und der zweite Betriebsmodus eine Drehung des Förderelements in die Reduktionsdrehrichtung umfasst.

Gemäß den obigen Erläuterungen wird also bei jedem Einschalten der Fördereinrichtung 10, also bei jedem Einschalten des Gebläses, die vorgenannte Erkennung der Drehrichtung des Förderelements 14, nämlich des Laufrads des Gebläses, mittels der Steuerung 8 durchgeführt. Wird erkannt, dass sich das Laufrad 14 wie gewünscht in die Vorzugsdrehrichtung um die Drehachse 12 dreht, dann wird die Fördereinrichtung 10 ohne das Auslösen der vorgenannten Vorrichtungsaktion weiter betrieben. Die Vorrichtung 2 befindet sich in dem Normalbetrieb.

Sollte sich das Laufrad 14 des Gebläses 10 nicht wie gewünscht in die Vorzugsdrehrichtung um die Drehachse 12 drehen, sondern um die Reduktionsdrehrichtung, dann löst die Steuerung 8 die vorgenannte Vorrichtungsaktion aus, nämlich, dass das Gebläse 10 in dem vorliegenden Fehlerfall ausgeschaltet wird und, nachdem das Laufrad 14 des Gebläses 10 ausgelaufen ist, erneut eingeschaltet wird. Das oben beschriebene Verfahren wird erneut gestartet. Bewegt sich das Laufrad 14 in dessen Vorzugsdrehrichtung, dann ist der oben genannte Normalbetrieb hergestellt und ein weiterer Eingriff mittels des Auslösens der Vorrichtungsaktion ist nicht erforderlich. Anderenfalls, falls sich das Laufrad 14 wiederum in Reduktionsdrehrichtung dreht, erfolgt wiederum der vorgenannte Eingriff, nämlich das Auslösen der Vorrichtungsaktion. Denkbar wäre auch, dass voneinander verschiedene Vorrichtungsaktionen in einer Art Kaskade durchlaufen werden. Sollte beispielsweise nach dreimaliger Anwendung der vorgenannten Vorrichtungsaktion ein Normalbetrieb der Vorrichtung nicht hergestellt sein, dann kann es vorgesehen sein, dass eine von dieser Vorrichtungsaktion verschiedene Vorrichtungsaktion, zum Beispiel das Abschalten der Fördereinrichtung und/oder das Abschalten der Heizung, als eine Art Sicherheitsabschaltung der Fördereinrichtung erfolgt. Gleichzeitig kann in diesem Fall, also wenn die Fördereinrichtung und/oder die Heizung lediglich abgeschaltet werden/wird, eine entsprechende Fehlermeldung mittels einer mit der Steuerung signalübertragend verbundenen Kommunikationsschnittstelle für die Kommunikation mit einem Benutzer der Vorrichtung auf dem Fachmann an sich bekannte Art und Weise ausgegeben werden.

Aufgrund der erfindungsgemäßen Ausbildung des vorliegenden Verfahrens und der Vorrichtung 2 ist es somit möglich, das Vorliegen einer ungewünschten Drehrichtung des Förderelements 14 der Fördereinrichtung 10 der Vorrichtung 2 automatisch zu erkennen, um in Abhängigkeit davon die Vorrichtung 2 mittels der Steuerung 8 derart anzusteuern, dass ein ordnungsgemäßer und funktionssicherer Weiterbetrieb der Vorrichtung 2 gewährleistet ist. Dies ist hier deshalb wichtig, weil ein vorher festgelegtes Fördervolumen der mittels der Heizung 16 erwärmten Luft, also ein vorher festgelegter Volumenstrom dieser Luft, für eine ordnungsgemäße und sichere Funktion der Vorrichtung 2, nämlich eine gewünschte Verteilung der von der Heizung 16 emittierten Wärme in dem als Spülraum ausgebildeten Behandlungsraum 6 und eine für den sicheren Betrieb der als Haushalts-Geschirrspüler ausgebildeten Vorrichtung 2 notwendige Wärmeabfuhr mittels der geförderten Luft, erforderlich ist.

Die Erfindung ist jedoch nicht auf das vorliegende Ausführungsbeispiel beschränkt. Siehe hierzu beispielsweise die in der Beschreibungseinleitung sowie in dem Beschreibungsteil zu dem konkreten Ausführungsbeispiel genannten alternativen und optionalen Merkmale.

## Patentansprüche

1. Verfahren zum Betrieb einer Vorrichtung (2), umfassend ein Gehäuse (4), einen in dem Gehäuse (4) angeordneten Behandlungsraum (6) zur Behandlung eines Behandlungsobjekts, eine Steuerung (8) und eine mit der Steuerung (8) signalübertragend verbundene Fördereinrichtung (10) für ein Fluid mit einem um eine Drehachse (12) der Fördereinrichtung (10) drehbaren Förderelement (14) zur Förderung des Fluids durch den Behandlungsraum (6), wobei das Verfahren die folgenden Verfahrensschritte in der angegebenen Reihenfolge aufweist:
- Erkennung einer Drehrichtung des Förderelements (14) mittels der Steuerung (8), wobei das Förderelement (14) eine Vorzugsdrehrichtung mit einem dazu korrespondierenden Fördervolumen der Fördereinrichtung (10) und eine der Vorzugsdrehrichtung entgegengesetzte Reduktionsdrehrichtung mit einem dazu korrespondierenden und gegenüber der Vorzugsdrehrichtung reduzierten Fördervolumen der Fördereinrichtung (10) aufweist;
- Auslösen einer Vorrichtungsaktion mittels der Steuerung (8) in Abhängigkeit der Erkennung der Vorzugsdrehrichtung oder der Reduktionsdrehrichtung des Förderelements (14).

2. Verfahren nach Anspruch 1, **dadurch gekennzeichnet, dass** die Ausführung der vorgenannten Verfahrensschritte in der angegebenen Reihenfolge nach jedem Einschalten der Fördereinrichtung (10) mittels der Steuerung (8) erfolgt.

3. Verfahren nach Anspruch 1 oder 2, **dadurch gekennzeichnet, dass** die Erkennung der Drehrichtung des Förderelements (14) in Abhängigkeit eines Verhältnisses einer elektrischen Leistungsaufnahme eines Motors der Fördereinrichtung (10) zum Antrieb des Förderelements (14) zu einer Drehzahl des Förderelements (14) erfolgt.

4. Verfahren nach einem der Ansprüche 1 bis 3, **dadurch gekennzeichnet, dass** die Vorrichtungsaktion eine der nachfolgend genannten Aktionen der Vorrichtung (2) umfasst: Abschalten der Fördereinrichtung mittels der Steuerung oder Abschalten der Fördereinrichtung (10) und erneutes Einschalten der Fördereinrichtung (10) mittels der Steuerung (8) nach einem erfolgten Auslauf des Förderelements (14) der Fördereinrichtung (10), Abschalten einer Heizung der Vorrichtung mittels der Steuerung.

5. Verfahren nach einem der Ansprüche 1 bis 4, **dadurch gekennzeichnet, dass** das Verfahren in einem Normalbetrieb der Vorrichtung mindestens einen ersten Betriebsmodus und mindestens einen zweiten Betriebsmodus aufweist, wobei der erste Betriebsmodus eine Drehung des Förderelements in die Vorzugsdrehrichtung und der zweite Betriebsmodus eine Drehung des Förderelements in die Reduktionsdrehrichtung umfasst.

6. Vorrichtung (2), umfassend ein Gehäuse (4), einen in dem Gehäuse (4) angeordneten Behandlungsraum (6) zur Behandlung eines Behandlungsobjekts, eine Steuerung (8) und eine mit der Steuerung (8) signalübertragend verbundene Fördereinrichtung (10) für ein Fluid mit einem um eine Drehachse (12) der Fördereinrichtung (10) drehbaren Förderelement (14) zur Förderung des Fluids durch den Behandlungsraum (6), **dadurch gekennzeichnet, dass** die Vorrichtung (2) zur Durchführung eines Verfahrens nach einem der Ansprüche 1 bis 5 geeignet ausgebildet ist.

7. Vorrichtung (2) nach Anspruch 6, **dadurch gekennzeichnet, dass** die Vorrichtung (2) als eine Vorrichtung (2) mit einer als Gebläse ausgebildeten Fördereinrichtung (10) ausgebildet ist, bevorzugt, dass das Gebläse als ein Heißluftgebläse zur Verteilung einer von einer zu dem Gebläse korrespondierend angeordneten Heizung (16) der Vorrichtung (2) emittierten Wärme in dem Behandlungsraum (6) ausgebildet ist.

8. Vorrichtung (2) nach Anspruch 6 oder 7, **dadurch gekennzeichnet, dass** ein Motor der Fördereinrichtung (10) als ein einphasiger, geregelter Motor ausgebildet ist.
